# EUROPÄISCHE PATENTSCHRIFT

(11) **EP 1 594 720 B1**
(45) Veröffentlichungstag und Bekanntmachung des Hinweises auf die Patenterteilung: **09.06.2010**
(21) Anmeldenummer: 04706612.1
(22) Anmeldetag: 30.01.2004
(51) Int. Cl.: B60N 2/48, B60N 2/427

(54) **KOPFSTÜTZENANORDNUNG FÜR EINEN KRAFTFAHRZEUGSITZ**
HEADREST ARRANGEMENT FOR THE SEAT OF A MOTOR VEHICLE
ENSEMBLE APPUIE-TETE POUR UN SIEGE DE VEHICULE A MOTEUR

(30) Priorität: 07.02.2003 DE 10306079
(43) Veröffentlichungstag der Anmeldung: 16.11.2005
(73) Patentinhaber: Brose Fahrzeugteile GmbH & Co. KG, Coburg, 96450 Coburg (DE)
(72) Erfinder: BOLEY, Dieter, 71229 Leonberg (DE); HOFMANN, Jochen, 96257 Marktgraitz (DE)
(74) Vertreter: Baumgärtel, Gunnar
(86) Internationale Anmeldenummer: PCT/DE2004/000202
(87) Internationale Veröffentlichungsnummer: WO 2004/069588

(56) Entgegenhaltungen:
- WO-A-02/058959
- DE-A- 2 100 676
- DE-A- 2 152 437
- DE-A- 19 754 311
- DE-U- 20 211 781
- US-A- 2 973 029
- US-A1- 2003 001 414

## Beschreibung

Die Erfindung betrifft eine Kopfstützenanordnung für einen Kraftfahrzeugsitz nach dem Oberbegriff des Patentanspruchs 1.

Eine derartige Kopfstützenanordnung umfasst ein Lehnengestell für eine Rückenlehne des Kraftfahrzeugsitzes, das sich entlang einer Lehnenlängsrichtung erstreckt; eine Oberkante des Lehnengestells, die das Lehnengestell in einer aufrechten Funktionsposition in Lehnenlängsrichtung nach oben begrenzt; eine am Lehnengestell in Lehnenlängsrichtvng oberhalb der Oberkante des Lehnengestells angeordnete (vorzugsweise höhenverstellbare) Kopfstütze mit einem Kopfstützenkörper, der eine zum Abstützen des Kopfes eines Fahrzeuginsassen vorgesehene Vorderseite sowie dahinter eine dem Kopf abgewandte Rückseite aufweist; ggf. eine Einrichtung zum Einstellen der Höhe der Kopfstütze durch Verschieben des Kopfstützenkörpers entlang der Lehnenlängsrichtung; sowie zusätzlich eine Einrichtung zur Sicherheitsverlagerung der Kopfstütze in einem Crash-Fall, um den Kopfstützenkörper nach oben und/oder vorne zu bewegen, insbesondere um den Kopfstützenkörper in Richtung auf den Kopf bzw. hinter den Kopf eines auf dem entsprechenden Kraftfahrzeugsitz befindlichen Fahrzeuginsassen zu bewegen.

Durch die Verlagerung der Kopfstütze in einem Crash-Fall nach vorne und/oder nach oben soll eine verbesserte Abstützung des Kopfes und Nackenbereiches des Fahrzeuginsassen in einem Crash-Fall erreicht werden.

Unter der aufrechten Funktionsposition des Lehnengestells wird vorliegend eine Position des Lehnengestells verstanden, in der sich dieses - bezogen auf den in ein Kraftfahrzeug eingebauten Zustand des entsprechenden Fahrzeugsitzes - im Wesentlichen entlang der vertikalen Fahrzeugachse erstreckt.

Unter der Lehnenlängsrichtung des Lehnengestells wird diejenige Richtung verstanden, entlang der sich die Wirbelsäule eines auf dem entsprechenden Kraftfahrzeugsitz befindlichen Fahrzeuginsassen erstreckt. Befindet sich das Lehnengestell in seiner aufrechten Funktionsposition, so verläuft die Lehnenlängsrichtung im Wesentlichen entlang der vertikalen Fahrzeugachse.

Eine Kopfstützenanordnung der eingangs genannten Art ist aus der DE 100 51 344 C1 bekannt. Bei dieser bekannten Anordnung schwenkt die Kopfstütze um eine fiktive (virtuelle) horizontale Achse, die während der Schwenkbewegung von einer Position, in der sie sich vor der Kopfstütze befindet, nach unten in eine Position wandert, in der sie sich vor dem Lehnengestell befindet. Demnach verläuft die Schwenkachse der Kopfstütze bei der bekannten Anordnung zu Beginn der Schwenkbewegung in einer horizontalen Ebene, die die Kopfstütze schneidet, und am Ende der Schwenkbewegung in einer horizontalen Ebene, die die Rückenlehne des entsprechenden Kraftfahrzeugsitzes in einem Bereich schneidet, der zum Abstützen des Rückens eines Fahrzeuginsassen dient.

Aus der US 2003/000141 A1 ist eine Kopfstützenanordnung bekannt, die eine Einrichtung aufweist, mit der eine Kopfstütze in einem Crash-Fall nach oben und vorne bewegt wird. Zwischen der Kopfstütze und einer Rückenlehne ist eine Dämpfungseinrichtung angeordnet, die beim Aufprall eines Kopfes auf die Kopfstütze die Rückstellbewegung der Kopfstütze aus ihrer verlagerten Position dämpft.

Der Erfindung liegt das Problem zugrunde, eine Kopfstützenanordnung der eingangs genannten Art weiter zu verbessern.

Dieses Problem wird durch die Schaffung einer Kopfstützenanordnung mit den Merkmalen des Patentanspruchs 1 gelöst.

Danach ist der Kopfstütze eine Dämpfungseinrichtung zugeordnet, die beim Aufprall eines Kopfes auf die Vorderseite des Kopfstützenkörpers eine begrenzte Rückstellbewegung der Kopfstütze aus ihrer verlagerten Position heraus in Aufprallrichtung (nach hinten) zulässt und die diese Bewegung dämpft. Erfindungsgemäß ist die Dämpfungseinrichtung derart ausgebildet, dass die Kopfstütze aufgrund eines Aufpralles des Kopfes des Fahrzeuginsassen entlang einer anderen Bahn bewegt wird als bei der vorhergehenden Verlagerung in Richtung auf den Kopf des Fahrzeuginsassen.

Bei der Rückstellbewegung handelt es sich also nicht um eine Bewegung, die die vorhergehende Crash-bedingte Verlagerung der Kopfstütze rückgängig machte, sondern vielmehr um eine hiervon unabhängige Bewegung zur Dämpfung des Aufpralles eines Kopfes auf den Kopfstützenkörper, die entlang einer durch die typische Aufprallrichtung vorgegebenen und durch entsprechende (separate) Führungsmittel definierten Bahn verläuft.

Die Dämpfungseinrichtung weist hierzu mindestens ein elastisch oder plastisch verformbares Deformationselement auf.

Die erfindungsgemäße Lösung hat den Vorteil, dass die Kopfstütze beim Aufprall des Kopfes eines Fahrzeuginsassen auf den Kopfstützenkörper (als Folge einer plötzlichen, negativen Beschleunigung des Fahrzeugs in einem Crash-Fall) eine kontrollierte, durch elastisch oder plastisch verformbare Mittel gedämpfte Bewegung der Kopfstütze in Aufprallrichtung des Kopfes nach hinten (im wesentlichen senkrecht zur Lehnenlängsrichtung) zulässt. Hierdurch werden mögliche Verletzungen als Folge eines zu harten Aufschlages des Kopfes gegen den Kopfstützenkörper verhindert, indem die Aufprallenergie kontrolliert abgebaut wird, in Abhängigkeit von der konstruktiven Auslegung der verwendeten Dämpfungsmittel.

Bei der Rückstellbewegung handelt es sich nicht um eine Bewegung, die die vorhergehende Crash-bedingte Verlagerung der Kopfstütze rückgängig machte, also genau entgegengesetzt zu dieser verlaufen müsste, sondern vielmehr um eine hiervon unabhängige. Bewegung (Rückwärtsbewegung nach hinten) zur Dämpfung des Aufpralles eines Kopfes auf den Kopfstützenkörper, die entlang einer durch die typische Aufprallrichtung des Kopfes vorgegebenen und durch entsprechende (separate) Führungsmittel definierten Bahn verläuft, welche in keiner bestimmtem Beziehung, zu der bei der vorherigen Crash-bedingten Verlagerung der Kopfstütze überstrichenen Bahnkurve stehen muss.

Bei einer vorherigen Verlagerung der Kopfstütze in Form einer Schwenkbewegung in Richtung auf den Kopf des Insassen befindet sich die (während der Schwenkbewegung gegebenenfalls wandernde) Schwenkachse vorzugsweise während der gesamten Schwenkbewegung der Kopfstütze - in Lehnenlängsrichtung betrachtet - oberhalb der Oberkante des Lehnengestells oder zumindest auf gleicher Höhe wie die Oberkante des Lehnengestells.

Dadurch, dass sich die Schwenkachse der Kopfstütze während der Schwenkbewegung oberhalb der Oberkante des Lehnengestells in horizontaler Richtung (senkrecht zur Lehnenlängsrichtung bzw. zur vertikalen Fahrzeugachse) erstreckt, lässt sich erreichen, dass die Schwenkbewegung der Kopfstütze nicht durch eine Kollision der Kopfstütze mit dem Sitzpolster beeinflusst werden kann. Die Kopfstütze bewegt sich daher in einem Crash-Fall definiert und zuverlässig entlang einer vorgegebenen Bahn, die ein optimales Abstützen des Kopfes eines zu schützenden Fahrzeuginsassen ermöglicht.

Als eine sich oberhalb der Oberkante des Lehnengestells erstreckende Achse bildet die Schwenkachse der Kopfstütze eine virtuelle (fiktive) Achse, die außerhalb der Lagerstellen liegt, über die die Kopfstütze am Lehnengestell schwenkbar angeordnet ist. Auch im Rahmen der vorliegenden Erfindung kann eine Bewegung der Schwenkachse während des crash-bedingten Verschwenkens der Kopfstütze erfolgen. Die Schwenkachse verbleibt dabei jedoch stets oberhalb der Oberkante des Lehnengestells.

Die Schwenkbewegung erfolgt derart, dass der Kopfstützenkörper einerseits in Lehnenlängsrichtung nach oben und andererseits quer zur Lehnenlängsrichtung nach vorne bewegt wird, um den Kopf eines Fahrzeuginsassen in einen Crash-Fall abzustützen.

Eine ergänzende (und von der Einrichtung zur Crash-bedingten Verlagerung der Kopfstütze unabhängige) Einrichtung zur Einstellung der Höhe der Kopfstütze in Lehnenlängsrichtung weist mindestens eine Führungsstange, vorzugsweise zwei Führungsstangen auf, die in Lehnenlängsrichtung verschieblich gelagert sind und an denen der Kopfstützenkörper festgelegt ist. Die Führungsstangen können insbesondere an einer am Lehnengestell vorgesehenen Grundplatte längsverschieblich geführt sein.

Die Einrichtung zur crash-bedingten Verlagerung der Kopfstütze dient in diesem Fall zur Verlagerung der Führungsstangen, die bei ihrer Bewegung den Kopfstützenkörper mitnehmen. Die Einrichtung zur Verlagerung der Kopfstütze kann hierbei insbesondere an der Grundplatte angreifen, an der die Führungsstangen der Kopfstütze längsverschieblich geführt sind und diese Grundplatte derart verlagern, dass die gewünschte (Schwenk-)Bewegung der Kopfstütze erzeugt wird.

Die Einrichtung zur Einstellung der Höhe der Kopfstütze entlang der Lehnenlängsrichtung sowie die Einrichtung zur Crash-bedingten Verlagerung der Kopfstütze in einem Crash-Fall können zu einer Baueinheit zusammengefasst sein, die sich vorzugsweise außerhalb des Lehnengestells montieren und dann komplett vormontiert in das Lehnengestell einbauen lässt.

In einer bevorzugten Ausführungsform der Erfindung verläuft die Schwenkachse bei einer zum Crash-bedingten Verlagern verschwenkbaren Kopfstütze derart oberhalb der Oberkante des Lehnengestells, dass sie die Führungsstangen der Kopfstütze schneidet. Sie liegt somit in der durch die Führungsstangen definierten Ebene. Die Schwenkachse liegt dann also nicht nur in Lehnenlängsrichtung oberhalb der Oberkante des Lehnengestells, sondern ist darüber hinaus derart bezüglich des Lehnengestells angeordnet, dass eine die Schwenkachse schneidende, sich in Lehneniängsrichtung erstreckende Gerade durch die Oberkante des Lehnengestells hindurch verläuft. Die Schwenkachse liegt demnach in einer gedachten Verlängerung des Lehnengestells über seine Oberkante hinaus.

Grundsätzlich kann die Schwenkachse jedoch auch an anderen Stellen oberhalb der Oberkante der Rückenlehne angeordnet sein, also insbesondere auch quer zur Lehnenlängsrichtung von dem Lehnengestell beabstandet neben dem Lehnengestell(davor oder dahinter).

Zur Erzeugung einer Schwenkbewegung um die oberhalb der Oberkante des Lehnengestells gebildete Schwenkachse können zwei am Lehnengestell in Lehnenlängsrichtung hintereinander angeordnete Führungseinrichtungen vorgesehen sein. Beide Führungseinrichtungen liegen vorzugsweise unterhalb der Oberkante des Lehnengestells.

Die beiden Führungseinrichtungen umfassen vorzugsweise paarweise beidseits der Kopfstütze seitlich am Lehnengestell vorgesehene Führungsmittel, insbesondere in Form von Führungsbahnen, die beispielsweise durch jeweils eine Führungskulisse gebildet werden können, in die die Kopfstütze mit entsprechenden Führungselementen eingreift, so dass durch Bewegung der Führungselemente entlang der Führungskulissen die Kopfstütze in einem Crash-Fall verschwenkt werden kann.

Die Führungseinrichtungen sind derart aufeinander abgestimmt, dass beim Vorklappen der Rückenlehne eine Schwenkbewegung um eine virtuelle Achse oberhalb der Oberkante der Rückenlehne erfolgt.

Die in Lehnenlängsrichtung obere Führungsbahn, d.h., die näher bei der Oberkante des Lehnengestells gelegene Führungsbahn, erstreckt sich im Wesentlichen entlang der Lehnenlängsrichtung oder ist nur geringfügig zu dieser geneigt. Die in Lehnenlängsrichtung untere Führungsbahn weist demgegenüber eine stärkere Neigung auf, so dass durch Führung je eines der Kopfstütze zugeordneten Führungselementes in den beiden Führungsbahnen eine Schwenkbewegung erzeugt wird.

Durch die Anordnung der oberen Führungsbahn entlang der Lehnenlängsrichtung wird erreicht, dass sich die Schwenkachse oberhalb der Oberkante des Lehnengestells befindet. Die untere, zur Lehnenlängsrichtung stärker geneigte Führungsbahn ist von besonderer Bedeutung für die Erzeugung der Schwenkbewegung um jene Achse.

Die in Lehnenlängsrichtung betrachtet untere (oder obere) Führungsbahn oder beide Führungsbahnen können durch einen schwenkbar gelagerten Führungshebel ersetzt werden, der mit einem Ende am Lehnengestell und mit dem anderen Ende an einer Baugruppe der Kopfstütze angelenkt ist.

Prinzipiell können beide Führungseinrichtungen jeweils wahlweise durch mindestens eine Führungsbahn oder mindestens einen Führungshebel gebildet werden, so dass beide Führungseinrichtungen durch Führungsbahnen, beide Führungseinrichtungen durch Führungshebel oder eine Führungseinrichtung (die obere oder untere) durch Führungsbahnen und die jeweils andere (untere oder obere) Führungseinrichtung durch Führungshebel gebildet sein kann.

Zur Freisetzung der Energie, die für die Verlagerung der Kopfstütze in einen Crash-Fall notwendig ist, kann ein Energiespeicher vorgesehen sein, der vorzugsweise chemische oder elastische Energie zur Verfügung stellt.

In einer bevorzugten Ausführungsform wird der Energiespeicher durch ein elastisches Mittel, insbesondere in Form mindestens eines Federelementes, gebildet, das derart gegen die Kopfstütze vorgespannt ist, dass es die Tendenz hat, die Kopfstütze zu verlagern, wobei eine Verriegelungseinrichtung der Bewegung der Kopfstütze solange entgegenwirkt, wie die Verriegelungseinrichtung nicht crash-bedingt entriegelt worden ist.

Die Verriegelungseinrichtung kann ein primäres Verriegelungselement umfassen, das unmittelbar auf eine Baugruppe der Kopfstütze einwirkt, um eine Verlagerung der Kopfstütze zu verhindern sowie ein sekundäres Verriegelungselement, welches das primäre Verriegelungselement in einer Position hält, in der es eine Verlagerung der Kopfstütze verhindert, und welches in einem Crash-Fall derart betätigt wird, dass sich das primäre Verriegelungselement in eine Position bewegen kann, in der es der Bewegung der Kopfstütze nicht mehr entgegenwirkt. Eine entsprechende Bewegung des primären Verriegelungselementes lässt sich dadurch erreichen, dass dieses mittels eines elastischen Elementes derart beaufschlagt ist, dass es automatisch eine die Kopfstütze freigebende Stellung einnimmt, wenn es nicht mehr durch das sekundäre Verriegelungselement blockiert wird.

Indem die beiden Verriegelungselemente über exzentrisch bzw. keilförmig ausgebildete Anschlagflächen zusammenwirken, wird insbesondere eine spielfreie Verriegelung der Rückenlehne ermöglicht.

Zum Entriegeln der Verriegelungseinrichtung, die die Kopfstütze gegen eine Verlagerung sichert, solange kein Crash-Fall vorliegt, können unterschiedliche physikalische und technische Prinzipien vorgesehen sein. Einerseits kann mittels eines Crash-Sensors in einem Crash-Fall ein Signal erzeugt werden, das einen Aktor, z. B. in Form eines Elektromagneten, eines Elektromotors oder einer pyrotechnischen Ladung, auslöst, der wiederum die Entriegelung der Verriegelungseinrichtung bewirkt. Andererseits können unmittelbar der Druck des Körpers eines Fahrzeuginsassen auf den Fahrzeugsitz (unter Verwendung einer Aufprallplatte) oder die Aktivierung eines Gurtstraffers eines Sicherheitsgurtes verwendet werden, um die Verriegelungseinrichtung zu entriegeln. Die entsprechenden Kräfte können beispielsweise über Zugmittel (Seil) oder eine Hebelanordnung (Gestänge) von der Aufprallplatte bzw. dem Gurtstraffer zu der Verriegelungseinrichtung übertragen werden.

Gemäß einer weiteren Variante kann ein mit einem Hebelelement gekoppeltes Massenpendel vorgesehen sein, das durch die in einem Crash-Fall auftretende negative Beschleunigung ausgelenkt wird und hierdurch, eine entsprechende Bewegung des zugeordneten Hebelelementes auslöst, welches wiederum auf die Verriegelungseinrichtung zur Entriegelung einwirkt.

Durch die Verriegelungseinrichtung der Kopfstütze und den zugeordneten Auslösemechanismus zum Entriegeln der Verriegelungseinrichtung in einem Crash-Fall soll sichergestellt werden, dass die Verlagerung der Kopfstütze tatsächlich nur dann stattfindet, wenn die hierfür vorgesehenen crash-typischen Bedingungen am Fahrzeug vorliegen.

Um bei der erfindungsgemäß vorgesehenen Rückstellbewegung der Kopfstütze aus ihrer in Richtung auf den Kopf des Fahrzeuginsassen vorverlagerten Position die gewünschte Dämpfungswirkung zu erreichen, wird eine Deformation der elastisch oder plastisch verformbare Mittel der Dämpfungseinrichtung durch eine Bewegung des Führungselementes (z.B. in Form eines in einer Führungskulisse verschieblich gelagerten Führungszapfens oder in Form eines Führungshebels) ausgelöst, das zuvor die Crash-bedingte Verlagerung der Kopfstütze gesteuert hat.

Gemäß einer Ausführungsform der Erfindung wirkt das Führungselement beim Zurückschwenken der Kopfstütze (direkt oder indirekt) auf das Deformationselement ein.

Nach einer anderen Ausführungsform der Erfindung steht das Führungselement mit dem Deformationselement in Wirkverbindung und bewegt dieses bei der Rückstellbewegung der Kopfstütze derart, dass es mit einem Anschlag der Kopfstützenanordnung in Einriff tritt und hierdurch die gewünschte Dämpfung bei der Bewegung der Kopfstütze verursacht.

Es kann insbesondere vorgesehen sein, dass neben der Führungseinrichtung, die in einem Crash-Fall das Verlagern der Kopfstütze (nach vorne in Richtung auf den Kopf eines Fahrzeuginsassen) bewirkt, zusätzliche Führungsmittel vorgesehen sind, die die Rückstellbewegung der Kopfstütze als Folge eines Aufpralls des Kopfes eines Fahrzeuginsassen ermöglichen. Bei einer aus einer Führungskulisse mit einem hierin geführten Führungszapfen bestehenden Führungseinrichtung kann ein zusätzlicher (separater) Führungsbereich beispielsweise durch einen abgewinkelten Abschnitt der Führungskulisse gebildet werden, in dem der Führungszapfen geführt wird, wenn die Kopfstütze nach hinten bewegt wird. In jenem abgewinkelten Abschnitt der Führungskulisse kann unmittelbar auch das zur. Bildung einer Dämpfungseinrichtung vorgesehene elastisch oder plastisch verformbare Element angeordnet sein.

Nach einer anderen Ausführungsform der Erfindung weist die Führungskulisse eine elastisch oder plastisch deformierbare seitliche Begrenzungswand auf, die durch den in der Führungskulisse geführten Führungszapfen bei der Rückstellbewegung der Kopfstütze deformiert wird.

Nach einem weiteren Ausführungsbeispiel der Erfindung wird das deformierbare Element der Dämpfungseinrichtung durch ein elastisches Element gebildet, welches zugleich als Energiespeicher dient, der in einem Crash-Fall das Verlagerung der Kopfstütze bewirkt.

In einer bevorzugten Ausführungsform der Erfindung verschwenkt die Kopfstütze bei der Rückstellbewegung (aufgrund eines Aufpralls des Kopfes eines Fahrzeuginsassen) um eine Schwenkachse, welche durch ein (bewegbares) Element der Einrichtung zur Crash-bedingten Verlagerung der Kopfstütze gebildet wird, das nach jener Verlagerung räumlich fixiert ist. Bei diesem beweglichen Element kann es sich beispielsweise um einen in einer Führungskulisse geführten Gleiter handeln, der mittels einander zugeordneter Verzahnungsbereiche am Gleiter einerseits und an der Führungskulisse andererseits fixierbar ist.

Gemäß einer Weiterbildung der Erfindung sind außerdem Mittel zur Verriegelung der Position der Kopfstütze nach der Rückstellbewegung unter der Wirkung des Aufpralls des Kopfes eines Fahrzeuginsassen vorgesehen. Dies ist insbesondere dann vorteilhaft, wenn die Dämpfungseinrichtung durch elastisch deformierbare Mittel gebildet wird, die ohne eine entsprechende Verriegelung der Kopfstütze einen Rückschlag verursachen könnten. Bei den Verriegelungsmitteln kann es sich beispielsweise um Formschlusselemente, insbesondere gebildet durch Verzahnungselemente, handeln, die in dem separaten, zur Steuerung der Rückstellbewegung dienenden Führungsbereich der Führungseinrichtung vorgesehen sind.

Weitere Merkmale und Vorteile der Erfindung werden bei der nachfolgenden Beschreibung eines Ausführungsbeispiels anhand der Figuren deutlich werden.

Es zeigen:
- Fig. 1a: eine Seitenansicht einer Kapfstützenanordnung mit einer bezüglich eines Lehnengestells höhenverstellbaren Kopfstütze, die zusätzlich in einem Crash-Fall nach vorne, in Richtung auf den Kopf eines Fahrzeuginsassen verschwenkbar ist und beim Aufprall des Kopfes auf die Kopfstütze zurück nach hinten schwenkbar ist;
- Fig. 1b: die Kopfstützenanordnung aus Figur 1a nach dem Verschwenken der Kopfstütze nach vorne;
- Fig. 1c: die Kopfstützenanordnung aus Figur 1a nach dem Verschwenken der Kopfstütze nach hinten;
- Fig. 2a: eine erste Abwandlung der Kopfstützenanordnung aus Figur 1a hinsichtlich der Ausbildung einer Dämpfungseinrichtung zum Dämpfen der Bewegung der Kopfstütze beim Zurückschwenken nach hinten;
- Fig. 2b: die Kopfstützenanordnung aus Figur 2a nach dem Verschwenken der Kopfstütze nach hinten;
- Fig. 3a: eine zweite Abwandlung der Kopfstützenanordnung aus Figur 1a hinsichtlich der Ausbildung der Dämpfungseinrichtung;
- Fig. 3b: die Kopfstützenanordnung aus Figur 3a nach dem Verschwenken der Kopfstütze nach hinten;
- Fig. 4a: eine weitere Abwandlung der Kopfstützenanordnung aus Figur 1 a hinsichtlich der Ausbildung der Dämpfungseinrichtung;
- Fig. 4b: die Kopfstützenanordnung aus Figur 4a nach dem Verschwenken der Kopfstütze nach vorne;
- Fig. 4c: die Kopfstützenanordnung aus Figur 4a nach dem Zurückschwenken der Kopfstütze nach hinten;
- Fig. 5a: eine Explosionsdarstellung einer Kopfstützenanordnung mit einer bezüglich eines Lehnengestells höhenverstellbaren Kopfstütze, die zusätzlich in einem Crash-Fall verschwenkbar ist;
- Fig. 5b: die Kopfstützenanordnung aus Figur 5a in perspektivischer Darstellung;
- Fig. 5c: eine Seitenansicht der Kopfstützenanordnung aus den Figuren 5a und 5b;
- Fig. 6a: die Kopfstützenanordnung aus Figur 5a nach dem Verschwenken der Kopfstütze;
- Fig. 6b: eine perspektivische Darstellung der Kopfstützenanordnung aus Figur 5a nach dem Verschwenken der Kopfstütze;
- Fig. 6c: eine Seitenansicht der Kopfstützenanordnung aus Figur 5a nach dem Verschwenken der Kopfstütze;
- Fig.7a: eine Einrichtung zum Verriegeln der Kopfstütze aus Figur 5a in ihrer Ausgangsposition vor einem Verschwenken;
- Fig. 7b: die Verriegelungseinrichtung nach einer Entriegelung;
- Fig. 8: eine schematische Darstellung einer Schwenkbewegung der Kopfstütze aus den Figuren 5a bis 6c;

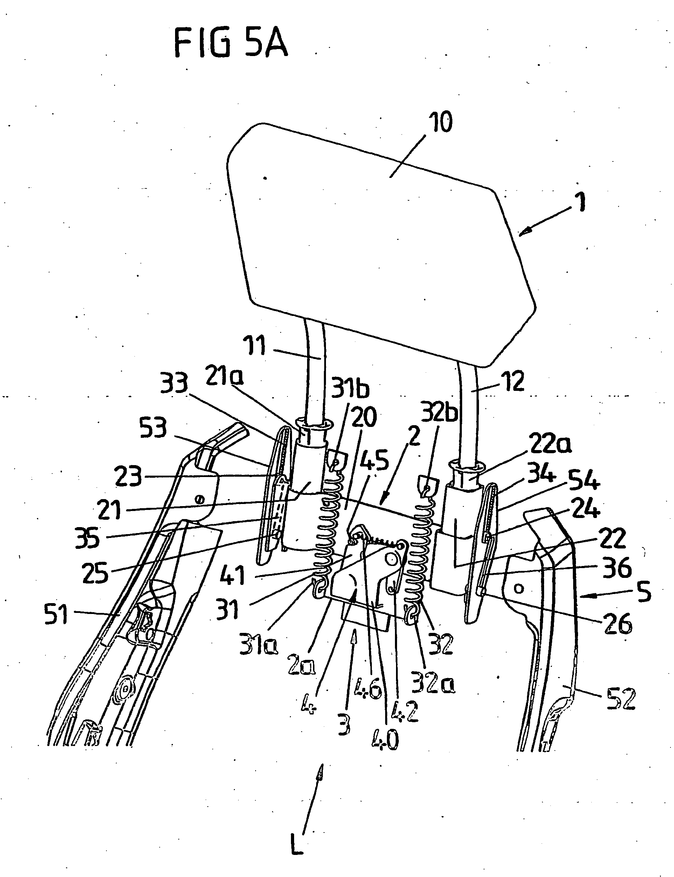

Es wird zunächst anhand der Figuren 5a bis 8 der grundsätzliche Aufbau einer Kopfstützenanordnung beschrieben, die in einem Crash-Fall eine Verlagerung der Kopfstütze, nämlich ein Verschwenken der Kopfstütze in Richtung auf den Kopf eines auf dem entsprechenden Fahrzeugsitzes-befindlichen Fahrzeuginsassen ermöglicht.

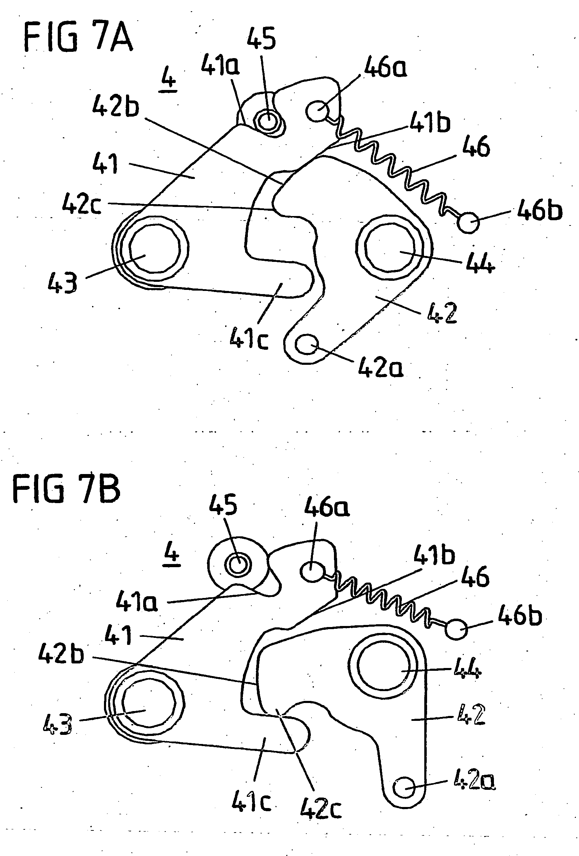

Die Figuren 5a bis 5c zeigen zusammen mit Figur 7a eine Kopfstützenanordnung für einen Kraftfahrzeugsitz mit einer Kopfstützenbaugruppe 1 (vorliegend auch einfach Kopfstütze genannt), die einen an zwei Führungsstangen 11, 12 in Form von Führungsholmen befestigen Kopfstützenkörper 10 aufweist. Die beiden Führungsstangen 11, 12 sind längsverschieblich aufgenommen in Führungshülsen 21, 22, die an einer Grundplatte 20 eines Kopfstützenträgers 2 vorgesehen sind und aus deren oberen Endabschnitten 21a, 22a die Führungsstangen 11, 12 mit dem Kopfstützenkörper 10 herausragen.

Die Kopfstützenbaugruppe 1 ist über den Kopfstützenträger 2 an einem Lehnengestell 5 eines Kraftfahrzeugsitzes festgelegt, das zwei Lehnenseitenteile 51, 52 sowie einen Lehnenkopf 50 umfasst. Der Lehnenkopf 50 bildet den oberen Endabschnitt des Lehnengestells 5 und definiert dessen Oberkante O. Das Lehnengestell 5 erstreckt sich entlang einer Lehnenlängsrichtung L, die im Wesentlichen der Erstreckungsrichtung der Wirbelsäule einer auf dem entsprechenden Fahrzeugsitz befindlichen, sich an der Rückenlehne anlehnenden Person entspricht. Bei einem in ein Kraftfahrzeug eingebauten Fahrzeugsitz, dessen Rückenlehne in eine aufrechte Stellung gebracht ist, verläuft die Lehnenlängsrichtung L entlang der vertikalen Fahrzeugachse (z-Achse).

Durch Verschiebung der Führungsstangen 11, 12 in den zugeordneten Führungshülsen 21, 22, die sich entlang der Lehnenlängsrichtung L erstrecken, ist die Höhe h des Kopfstützenkörpers 10 bezüglich der Oberkante O des Lehnengestells 5, d.h., der Abstand des Kopfstützenkörpers 10 von der Oberkante O des Lehnengestells 5 einstellbar. Hierfür sind unterschiedliche manuelle bzw. fremdkraftbetätigte (elektrische) Antriebe bekannt, die auf der Grundplatte 20 oder an der Kopfstützenbaugruppe 1 angeordnet sein können. Auf die Darstellung eines Antriebs zur Einstellung der Höhe h des Kopfstützenkörpers 10 wurde hier verzichtet, da die vorliegende Erfindung unabhängig von der Art des zur Einstellung der Höhe h des Kopfstützenkörpers 10 verwendeten Antriebs ist.

Zusätzlich zu einer Einrichtung zur Einstellung der Höhe des Kopfstützenkörpers 1 ist gemäß der vorliegenden Erfindung eine Einrichtung zum Verschwenken des Kopfstützenkörpers 10 in einem Crash-Fall vorgesehen, mittels der eine Schwenkbewegung des Kopfstützenkörpers 10 erzeugbar ist, durch die dieser in einer Richtung nach oben entlang der Lehnenlängsachse L sowie nach vorne in einer Richtung V senkrecht zur Lehnenlängsachse L bewegbar ist. Durch eine solche Bewegung soll in einem Crash-Fall der Kopfstützenkörper 10 nach vorne gegen den Kopf und Nacken des auf dem entsprechenden Fahrzeugsitz befindlichen Fahrzeuginsassen geführt werden und gleichzeitig verhindert werden, dass der Fahrzeuginsasse mit seinem Kopf in den Bereich zwischen der Oberkante des Kopfstützenkörpers 10 und dem Dachhimmel gerät.

Die Einrichtung zum Verschwenken des Kopfstützenkörpers 10 greift an der Grundplatte 20 des zu der Kopfstützenbaugruppe 1 gehörenden Kopfstützenträgers 2 an und umfasst zwei parallel zueinander angeordnete, in Lehnenlängsrichtung L erstreckte Zugfedern 31, 32, die jeweils mit ihrem unteren Ende 31a bzw. 32a an einem Fortsatz 2a des Kopfstützenträgers 2 und mit ihren oberen Enden 31b bzw. 32b am Lehnenkopf 50 eingehängt sind. Die beiden Federelemente 31, 32 stehen derart unter Vorspannung, dass sie die Tendenz haben, die Grundplatte 20 des Kopfstützenträgers 2 und damit die Kopfstütze 1 insgesamt entlang der Lehnenlängsrichtung L anzuheben.

Eine Bewegung der Kopfstütze 1 zusammen mit dem Kopfstützenträger 2 unter der Wirkung der vorgespannten Federelemente 31, 32 wird jedoch durch eine Verriegelungseinrichtung 4 verhindert, die an einem lehnengestellfesten Träger 40 angeordnet ist. Diese Verriegelungseinrichtung 4 umfasst ein um eine Achse 43 schwenkbar gelagertes primäres Verriegelungselement 41 in Form eines Verriegelungshebels mit einer Ausnehmung 41a, die im verriegelten Zustand der Verriegelungseinrichtung 4 einen von der Grundplatte 20 des Kopfstützenträgers 2 abstehenden Fortsatz (Bolzen 45) umgreift. Hierdurch wird eine Bewegung der Grundplatte 20 gegenüber dem lehnengestellfesten Träger 40 der Verriegelungseinrichtung 4 und somit eine Bewegung der Kopfstützenbaugruppe 1 insgesamt gegenüber dem Lehnengestell 5 verhindert. Das primäre Verriegelungselement 41 ist mittels eines elastischen Elementes in Form einer Zugfeder 46, die mit einem Ende 46a an dem Verriegelungselement 41 und mit dem anderen Ende 46b an dem Träger 40 angreift, derart elastisch vorgespannt, dass es die Tendenz hat, den Bolzen 45 freizugeben. Dem wirkt jedoch ein um eine zweite Achse 44 schwenkbar gelagertes sekundäres Verriegelungselement 42 in Form eines weiteren Verriegelungshebels entgegen, das mit einem Anschlag 42b gegen einen zugeordneten Anschlag 41b des primären Verriegelungselementes 41 drückt und daher eine Bewegung des primären Verriegelungselementes 41 unter der Wirkung des elastischen Elementes 46 verhindert.

Das sekundäre Verriegelungselement 42 weist einen Angriffspunkt 42a für eine Betätigungseinrichtung auf, die in einem Crash-Fall, ausgelöst wird und eine Schwenkbewegung des sekundären Verriegelungselementes 42 um seine Schwenkachse 44 bewirkt. Hierzu kann beispielsweise ein sensorgesteuerter Aktor in Form eines Elektromagneten (Hubmagneten), eines Elektromotors oder einer pyrotechnischen Ladung dienen, oder ein mit einem Betätigungshebel gekoppeltes Massenpendel oder ein Koppelmechanismus, der das sekundäre Verriegelungselement 42 an einen Gurtstraffer koppelt.

Unabhängig von dem verwendeten physikalischen und technischen Prinzip zum Betätigen und Verschwenken des sekundären Verriegelungselementes 42 ist von Bedeutung, dass die entsprechende Bewegung des sekundären Verriegelungselementes 42 in einem Crash-Fall zuverlässig ausgelöst wird und dass das sekundäre Verriegelungselement 42 ansonsten in einer Position gehalten ist, in der es eine Bewegung des primären Verriegelungselementes 41 verhindert. Zur Erzielung der letztgenannten Funktion kann das sekundäre Verriegelungselement 42 beispielsweise unter Verwendung eines weiteren, in den Figuren nicht dargestellten elastischen Elementes in der in Figur 7a dargestellten Position fixiert werden, in der es eine Bewegung des primären Verriegelungselementes 41 um seine Schwenkachse 43 verhindert. Die von dem entsprechend elastischen Element aufgebrachte Kraft zur Fixierung des sekundären Verriegelungselementes 42 muss von der Kraft überwindbar sein, die beim Betätigen des sekundären Verriegelungselementes 42 durch einen Aktor, Gurtstraffer oder dergleichen aufgebracht wird.

Zur Erzielung einer definierten Schwenkbewegung des Kopfstützenkörpers 10 nach dem Entriegeln der Verriegelungseinrichtung 4 unter Wirkung der Federelemente 31, 32 ist die Grundplatte 20 des Kopfstützenträgers 2 mittels an den abgewinkelten Stirnseiten der Grundplatte 20 vorgesehenen Führungselementen 23, 24 sowie 25, 26 in zugeordneten Längsführungen (Kulissenführungen) 33, 34 bzw. 35, 36 gestellfester Führungsteile 53, 54 geführt.

Die an je einer Längsseite 51, 52 des Lehnengestells 5 angeordneten Führungsteile 53, 54 weisen dabei jeweils zwei in den Längsrichtungen L übereinander angeordnete Führungskulissen 33 und 35 bzw. 34 und 36 auf. Dabei sind die auf gleicher Höhe entlang der Lehnenlängsrichtung L angeordneten Führungskulissen 33, 34 bzw. 35, 36 des einen Führungsteils 53 und anderen Führungsteils 54 jeweils identisch ausgebildet.

Die in Lehnenlängsrichtung oberen Führungskulissen 33, 34 verlaufen im Wesentlichen parallel zur Lehnenlängsrichtung L und sind nur leicht bezüglich dieser geneigt. Sie erstrecken sich somit auch im Wesentlichen parallel zu den Führungsstangen 11, 12 im Bereich ihres Austritts aus den oberen Endabschnitten 21 a, 22a der Führungshülsen 21. 22. Die unteren Führungskulissen 35, 36 sind demgegenüber stärker gegenüber der Lehnenlängsrichtung L geneigt, und zwar jeweils von vorne unten nach hinten oben.

Durch das Zusammenwirken der in Lehnenlängsrichtung L übereinander angeordneten Führungskulissen 33, 35 bzw. 34, 36 an beiden Längsseiten des Lehnengestells 5 wird die gewünschte Schwenkbewegung des Kopfstützenkörpers 1 erreicht, wie nachfolgend näher erläutert werden wird.

In einem Crash-Fall, insbesondere bei einem Heck-Crash wird die der Grundplatte 2 zugeordnete Verriegelungseinrichtung 4 durch Einwirkung auf das sekundäre Verriegelungselement 42 mittels eines der voranstehend beschriebenen Mechanismen entriegelt, wie in Figur 7b dargestellt. Der besagte Mechanismus wirkt auf die Angriffsstelle 42a des sekundären Verriegelungselementes 42 ein und bewirkt so eine Schwenkbewegung des sekundären Verriegelungselementes 42 um seine Schwenkachse 44, durch die die Stützfläche 42b des sekundären Verriegelungselementes 42 von dem primären Verriegelungselement 41 weg bewegt wird, so dass dieses unter der Wirkung des zugeordneten elastischen Elementes 46 um seine Achse 43 verschwenken kann. Hierbei gibt das primäre Verriegelungselement 41 den Bolzen 45 frei, so dass einer Bewegung der Grundplatte 20 des Kopfstützenträgers 2 unter der Wirkung der an der Grundplatte 20 angreifenden Federelemente 31, 32 nichts mehr entgegensteht.

Die Bewegung des primären Verriegelungselementes 41 um seine Achse 43 wird zudem durch einen Anschlag 42c des sekundären Verriegelungselementes 42 ausgelöst bzw. verstärkt, der auf einen zugeordneten Anschlag 41 c des primären Verriegelungselementes 41 einwirkt.

Unter der Wirkung der in den vorgespannten Federelementen 31, 32 als Energiespeicher gespeicherten elastischen Energie bewegt sich nun die Grundplatte 20 des Kopfstützenträgers 2 nach oben. Dabei wird aufgrund der Führung der Grundplatte 20 mittels Führungselementen 23, 24; 25, 26 in zugeordneten Führungskulissen 33, 34 bzw. 35, 36 eine Schwenkbewegung vollzogen, die einer kombinierten Bewegung in Lehnenlängsrichtung L nach oben sowie in einer Richtung V senkrecht hierzu nach vorne entspricht. Diese Schwenkbewegung wird unmittelbar auf den über die Führungsstangen 11,12 am Kopfstützenträger 2 angeordneten Kopfstützenkörper 10 übertragen.

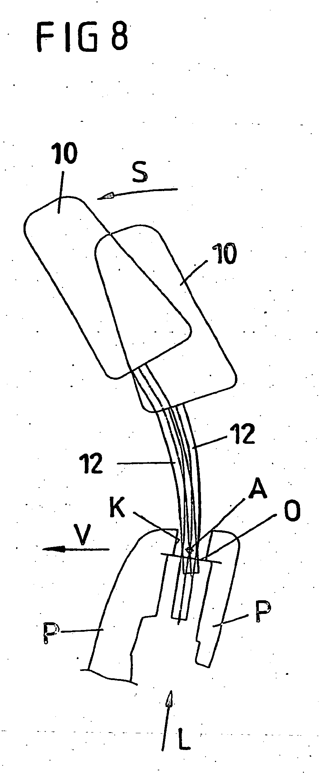

Die entsprechende Schwenkbewegung S ist anhand Figur 8 erkennbar, in der der Kopfstützenkörper 10 zum einen in seine Ausgangsposition vor Ausführung der Schwenkbewegung und zum anderen in seiner Endposition nach Ausführung der Schwenkbewegung S dargestellt ist.

Es ist deutlich erkennbar, dass die Schwenkbewegung S eine Verlagerung des Kopfstützenkörpers 10 einerseits der entlang der Lehnenlängsrichtung L nach oben und andererseits senkrecht hierzu in einer Richtung V nach vorne bewirkt, so dass sich der Kopfstützenkörper 10 hin zu dem Kopf eines auf dem entsprechenden Kraftfahrzeugsitz befindlichen Fahrzeuginsassen bewegt und dabei den Kopf insbesondere derart übergreift, dass dieser nicht über die Oberkante des Kopfstützenkörpers 10 gelangen kann.

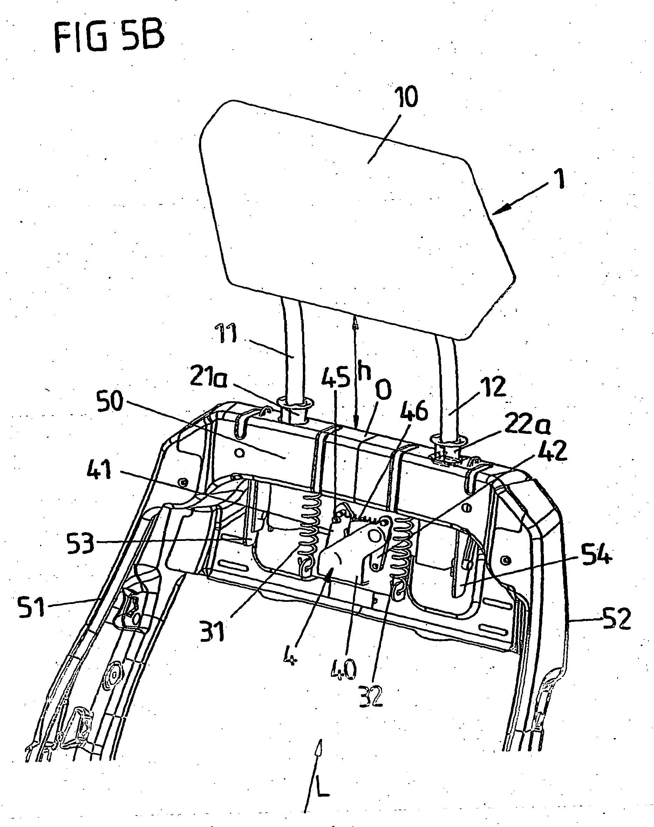

Anhand Figur 8 wird ferner deutlich, dass die Schwenkbewegung S einer Bewegung um eine virtuelle Achse A entspricht, die sich oberhalb der Oberkante O des Lehnenkopfes 50 (vgl. Figur 5a und 5b) horizontal, d. h. senkrecht zur Lehnenlängsrichtung L, erstreckt und dabei die Führungsstangen 11, 12 der Kopfstützenbaugruppe schneidet. Das am Lehnengestellt vorgesehene Lehnenpolster P weist oberhalb der Oberkante O des Lehnenkopfes eine kanalförmige Ausnehmung K von solcher Größe auf, dass die Schwenkbewegung der Führungsstangen 11, 12 um die Schwenkachse A durch das Polster P nicht behindert wird.

Figur 8 zeigt eine besonders vorteilhafte Lage der Schwenkachse A oberhalb der Oberkante O des Lehnenkopfes, in der diese die Führungsstangen 11,12 der Kopfstütze 1 schneidet und somit in der durch die Führungsstangen 11, 12 aufgespannten Ebene bzw. unmittelbar oberhalb der Oberkante O des Lehnenkopfes verläuft. D. h., eine sich in Lehnenlängsrichtung L erstreckende, die Schwenkachse A schneidende Gerade würde auch die Oberkante O des Lehnenkopfes schneiden.

Die Schwenkachse kann aber grundsätzlich auch an anderer Stelle oberhalb der Oberkante O des Lehnenkopfes angeordnet sein, beispielsweise senkrecht zur Lehnenlärigsrichtung L von dem Lehnengestell beabstandet vor oder hinter dem Lehnengestell. Entscheidend ist, dass die Schwenkachse A in Lehnenlängsrichtung L auf einer Höhe liegt, die mindestens der Höhe der Oberkante O entspricht.

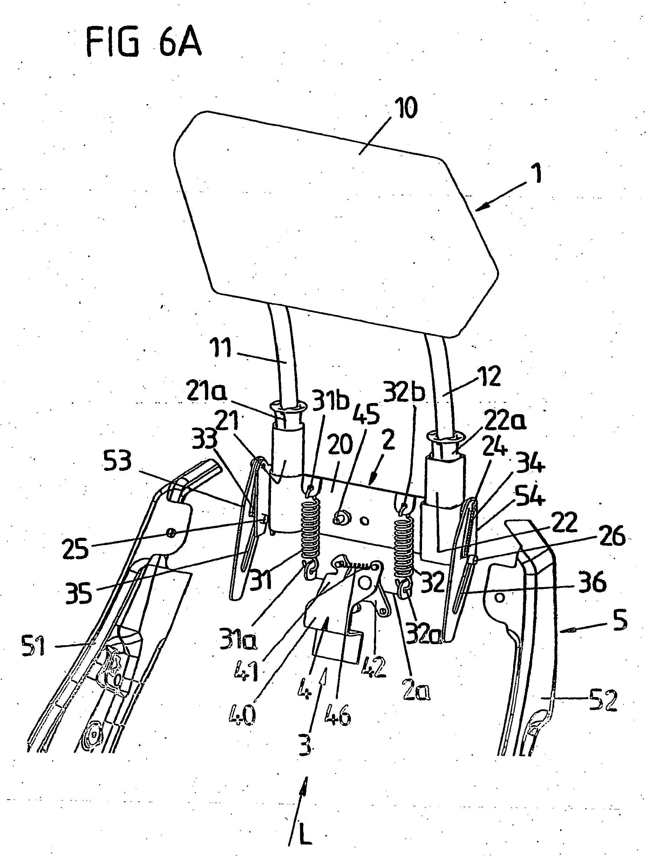

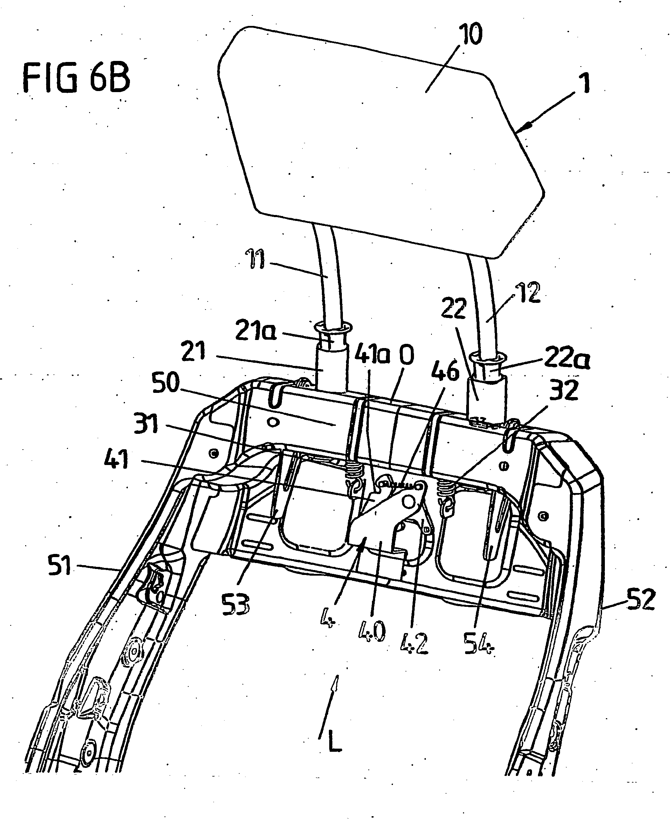

Die Figuren 6a-bis 6c zeigen die Kopfstützenanordnung aus den Figuren 5a bis 5c nach Abschluss der Schwenkbewegung der Kopfstütze 1. Anhand der Figuren wird deutlich, dass die an der Kopfstützenbaugruppe 1, genauer an der Grundplatte 20 des Kopfstützenträgers 2 vorgesehenen Führungselemente 23, 24, 25, 26 in der jeweils zugeordneten Führungskulisse 33, 34, 35, 36 von einem unteren Ende (unterer Anschlag) zu einem oberen Ende (oberer Anschlag) verschoben wurden, und zwar unter der Wirkung der an der Grundplatte 20 angreifenden Federelemente 31, 32. Dies hat zu der Schwenkbewegung der Kopfstütze 1 in die in den Figuren 6a bis 6c dargestellte Endposition geführt.

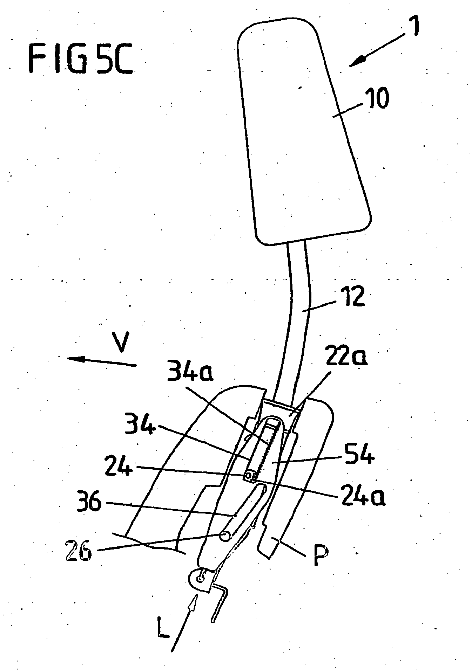

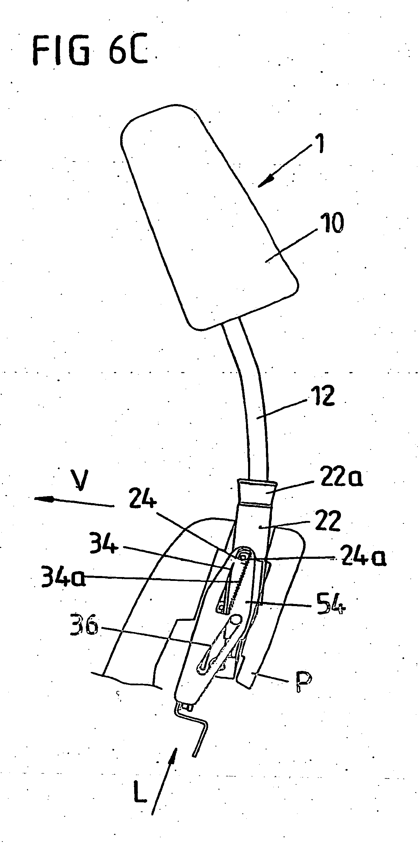

Insbesondere anhand der Figuren 5c und 6c wird deutlich, dass sich die jeweilige obere Führungskulisse 33, 34 im zugeordneten Führungsteil 53, 54 im Wesentlichen entlang der Lehnenlängsrichtung L erstreckt, während die jeweilige untere Führungskulisse 36, 37 zur Lehnenlängsrichtung L stark geneigt ist. Dies erzeugt die gewünschte Schwenkbewegung um eine Achse A (vergl. Figur 8) oberhalb der Oberkante O des Lehnenkopfes.

Ferner wird anhand der Figur 5c und 6c am Beispiel einer der beiden oberen Führungskulissen 33, 34 deutlich, dass die Führungskulisse 34 an einer Längsseite mit einer Längsverzahnung 34a versehen ist, der eine entsprechende Verzahnung 24a des in der Kulisse 34 geführten Führungselementes 24 zugeordnet ist. Die Verzahnungen 24a, 34a sind derart als Schrägverzahnungen ausgebildet, dass sie zwar eine Bewegung des Führungselementes 24a in Lehnenlängsrichtung L nach oben zulassen, die zu einem Verschwenken der Kopfstütze 1 führt, jedoch nicht eine Bewegung entlang der entgegengesetzten Richtung nach unten. Hierdurch ist die Kopfstützenbaugruppe insgesamt und somit insbesondere der Kopfstützenkörper 10 nach Ausführung der Schwenkbewegung in seiner Endposition fixiert. Dadurch wird verhindert, dass bei einem Aufprall des Kopfes des zu schützenden Fahrzeuginsassen auf den Kopfstützenkörper 10 dieser wieder in seine ursprüngliche Position zurückbewegt werden kann. Die ineinander greifenden Verzahnungsbereiche 24a, 34a dienen somit als Rückstellsperre, mit der eine Rückstellung der Kopfstütze aus der durch Verschwenken erzeugten Endposition heraus in entgegengesetzter Richtung vermieden wird.

Allerdings ist eine solche Rückstellung dann möglich, wenn die beiden Verzahnungen 24a, 34a außer Eingriff gebracht werden, zum Beispiel durch Ausübung einer Zug- oder Druckkraft auf den Kopfstützenkörper 10 in einer Richtung V senkrecht zur Lehnenlängsrichtung L nach vorne. Stehen die Verzahnungen 24a, 34a außer Eingriff, so kann das Führungselement 24 in der Führungskulisse 34 wieder nach unten bewegt werden und die gesamte Kopfstützenbaugruppe bewegt sich in ihre Ausgangsposition, wobei die Federelemente 31, 32 (vgl. Figuren 5a und 5b) wieder gespannt werden. Sie speichern also wieder elastische Energie, um die Kopfstütze 1 im Bedarfsfall erneut verschwenken zu können. Es handelt sich hier also um eine reversible Sicherheitsvorrichtung.

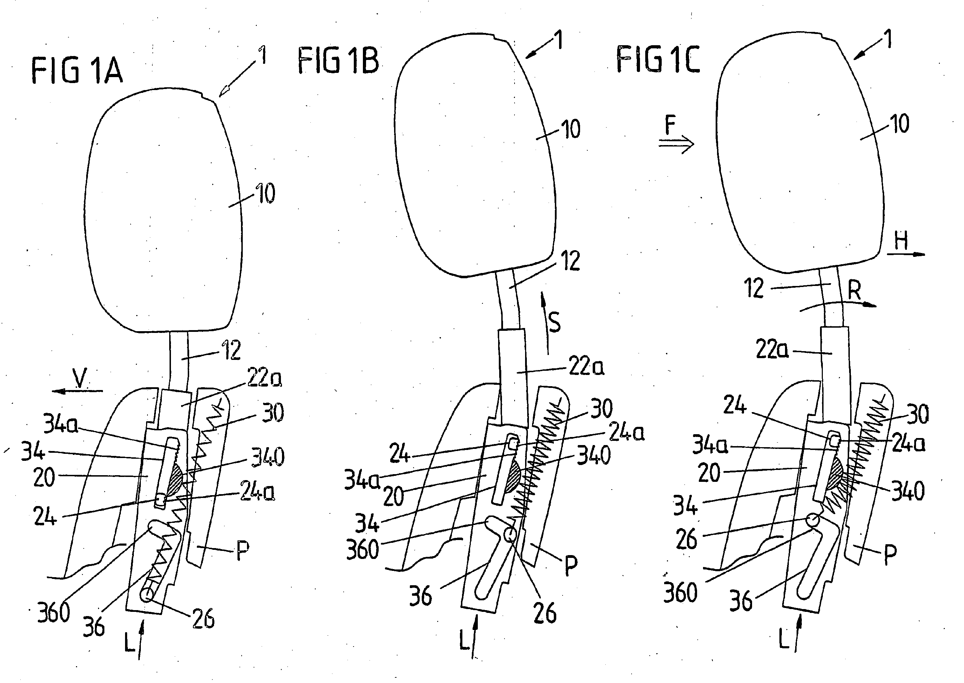

Es werden nun anhand der Figuren 1a bis 4c unterschiedliche Beispiele von Kopfstützenanordnungen der in den Figuren 5a bis 8 dargestellten Art gezeigt, die beim Aufprall des Kopfes des Fahrzeuginsassen auf die nach vorne verlagerte Kopfstütze eine durch ein Deformationselement gedämpfte Bewegung (Rückstellbewegung) des Kopfstützenkörpers nach hinten, in Aufprallrichtung des Kopfes ermöglichen, die vorliegend beispielhaft jeweils als Zurückschwenken abläuft.

Eine erste Anordnung dieser Art ist in Figur 1a dargestellt, bei der es sich um eine der Figur 5c entsprechende Seitenansicht handelt. Die Weiterbildung gemäß Figur 1a unterscheidet sich von der Kopfstützenanordnung gemäß Figur 5c zum einen dadurch, dass die untere Führungskulisse 36 (und ebenso die in der Seitenansicht nicht erkennbare, zweite untere Führungskulisse 35) an ihrem oberen Ende einen abgewinkelten Führungsabschnitt 360 aufweist, der sich im Wesentlichen senkrecht zu den übrigen Abschnitten der Führungskulisse 36 erstreckt. Er verläuft somit insbesondere im Wesentlichen quer zur Lehnenlängsrichtung L.

Des Weiteren ist als Energiespeicher, der in einem Crash-Fall ein Verschwenken der Kopfstütze 1 nach vorne, in Richtung auf den Kopf eines Fahrzeuginsassen auslöst, eine vorgespannte Schraubenfeder 30 (Zugfeder) vorgesehen, die mit einem Ende an dem in der unteren Führungskulisse 36 geführten Führungszapfen 26 und mit dem anderen Ende am Lehnengestell fixiert ist.

Figur 1b zeigt die Kopfstützenanordnung aus Figur 1a nach dem Verschwenken des Kopfstützenkörpers 10 in Richtung auf den Kopf eines Fahrzeuginsassen, wie zuvor anhand der Figuren 5a bis 8 im Einzelnen erläutert. Es ist erkennbar, dass diese Schwenkbewegung S ausgelöst wurde durch die Zugfeder 30, aufgrund deren Vorspannung der Führungszapfen 26 in der unteren Führungskulisse 36 nach oben bewegt worden ist.

Kommt es nun als Folge einer mit dem Crash verbundenen negativen Beschleunigung zu einem Aufprall des Kopfes eines Fahrzeuginsassen mit einer Kraft F auf die zum Abstützen des Kopfes vorgesehene Oberfläche des Kopfstützenkörpers 10, so erfolgt gemäß Figur 1c eine weitere Schwenkbewegung R der Kopfstütze nach hinten, d. h., der Kopfstützenkörper 10 bewegt sich im Wesentlichen in Aufprallrichtung des Kopfes und entgegen der Richtung V, entlang derer er zuvor gemäß den Figuren 1a und 1b in Richtung auf den Kopf eines Fahrzeuginsassen vorverlagert worden war, vergleiche Figur 1c. Diese Schwenkbewegung R erfolgt um den in der oberen Führungskulisse 34 (und in entsprechender Weise den in der in den Figuren 1a bis 1c nicht erkennbaren zweiten oberen Führungskulisse 33) geführten Gleiter 24, der in seiner beim Verschwenken der Kopfstützen nach vorne erreichten oberen Endposition (vergleiche Figur 1b) mittels einander zugeordneter Verzahnungsbereiche 24a des Gleiters 24 einerseits und 34a der zugeordneten Führungskulisse 34 andererseits verriegelt ist. Die Schwenkbewegung wird ermöglicht durch den abgewinkelten Abschnitt 360 der unteren Kulissenführung 36, entlang derer sich in der unteren Kulissenführung 36 geführte Zapfen 26 beim Verschwenken des Kopfstützenkörpers 10 in einer Richtung V nach vorne bewegt.

Bei der Schwenkbewegung R nach hinten bewegt sich der Kopfstützenkörper 10 auf einer anderen Bahn als bei der vorherigen Schwenkbewegung S nach vorne. Denn die vorherige Schwenkbewegung S wurde im Wesentlichen definiert durch den entlang der Lehnenlängsrichtung L erstreckten und dabei leicht gegenüber dieser geneigten Abschnitt der unteren Führungskulisse 36. Dieser bewirkte eine Bewegung des Kopfstützenkörpers 10 in einer Richtung V nach vorne bei einer gleichzeitigen Bewegung in Lehnenlängsrichtung L nach oben. Demgegenüber handelt es sich bei der zweiten Schwenkbewegung nach hinten um eine Schwenkbewegung, die um eine einzige, genau definierte und durch den Gleiter 24 der oberen Führungskulisse 34 festgelegte Schwenkachse erfolgt und die im Wesentlichen einer Bewegung des Kopfstützenkörpers 10 in einer Richtung H nach hinten entspricht. Der Kopfstützenkörper wird hierbei also nicht substantiell in Lehnenlängsrichtung L nach unten bewegt.

Die Schwenkbewegung R des Kopfstützenkörpers 10 nach hinten wird gedämpft durch eine Deformation der Zugfeder 30, die aufgrund Ihrer Verbindung mit dem in der unteren Führungskulisse 36 geführten Führungszapfen 26 bei der Bewegung des Führungszapfens 26 entlang des abgewinkelten Abschnittes 360 der Führungskulisse 36 mit einem durch ein Stützelement 340 der Grundplatte 20 des Kopfstützenträgers gebildeten Anschlag in Eingriff gerät. Der Dämpfungseffekt wird dabei bestimmt durch die Biegesteifigkeit der Zugfeder 30.

Da der abgewinkelte Abschnitt 360 der unteren Führungskulisse 36 (in Lehnenlängsrichtung L betrachtet) unterhalb der durch den Gleiter 24 gebildeten Schwenkachse liegt und der Kopfstützenkörper 10 oberhalb jenes Gleiters 24 liegt bewegt sich der Führungszapfen 26 in dem abgewinkelten Abschnitt 360 der Kulissenführung 36 im Wesentlichen in entgegengesetzter Richtung V wie der Kopfstützenkörper 10 bei dessen Bewegung in einer Richtung H nach hinten.

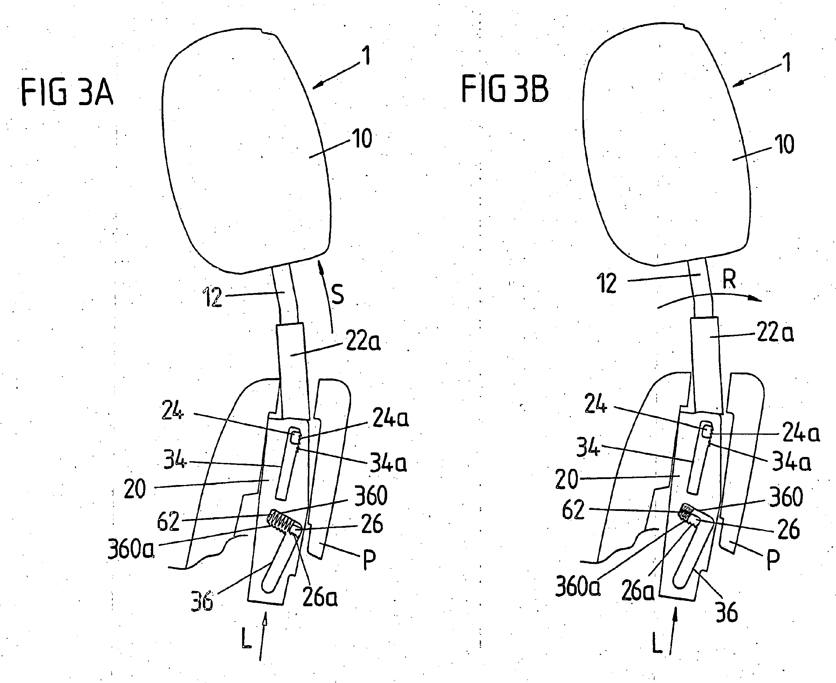

Um ein Zurückschlagen des Kopfstützenkörpers 10 nach vorne zu vermeiden, können zusätzliche Mittel vorgesehen sein, um den Führungszapfen 26 in seiner in Figur 1c dargestellten Endposition in dem abgewinkelten Abschnitt 360 der Führungsbahn 36 zu verriegeln. Dies wird weiter unten anhand der Figuren 3a und 3b noch näher erläutert werden.

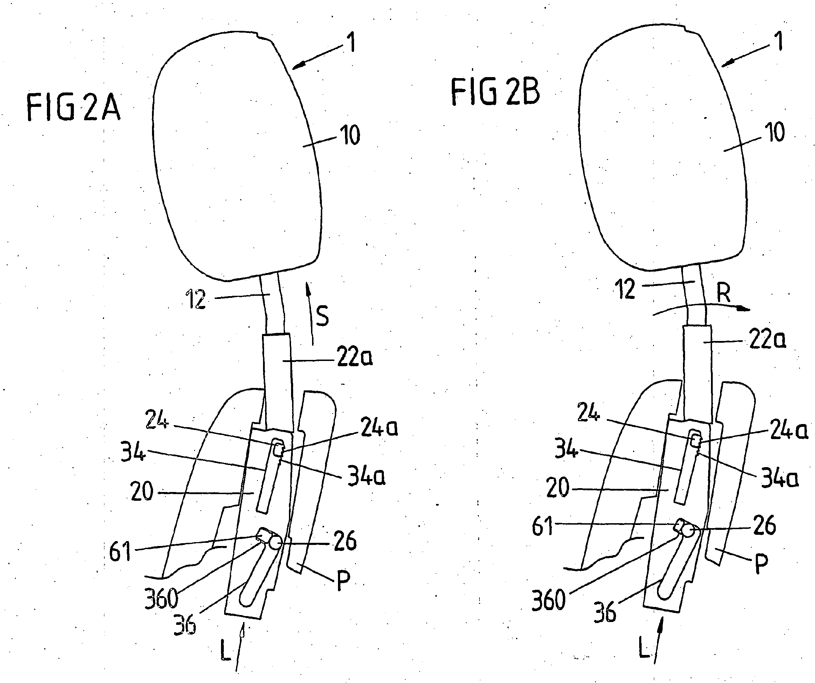

Figur 2a zeigt eine erste Abwandlung der Anordnung aus Figur 1, wobei der Unterschied darin besteht, dass das zur Bereitstellung der Dämpfung verwendete Deformationselement 61 in dem abgewinkelten Abschnitt 360 der Führungskulisse 36 angeordnet ist. Es handelt sich hierbei vorzugsweise um ein plastisch verformbares Element, z. B. in Form einer stauchbaren Buchse, die zusätzlich nach Art eines Wellrohres vorgeformt sein kann, um eine definierte Kompressionsrichtung (entlang der Erstreckungsrichtung des abgewinkelten Abschnittes 360 der Führungskulisse 36) vorzugeben.

Die plastische Deformierbarkeit des Deformationselementes 61 hat den Vorteil, dass bei dessen Deformation keine elastischen Kräfte erzeugt werden, die zu einem Rückschlag der Kopfstütze führen würden. Allerdings muss dieses Element nach einem Crash-Fall der zu einer Aktivierung des Schwenkmechanismus der Kopfstützenanordnung geführt hat (vergleiche Figur 2b, in der das Deformationselement 61 im gestauchten Zustand nach dem Zurückschwenken des Kopfstützenkörpers 1 nach hinten dargestellt ist), ersetzt werden.

Die Figuren 3a und 3b zeigen eine Abwandlung der Anordnung aus den Figuren 2a und 2b, wobei der Unterschied darin besteht, dass das in dem abgewinkelten Abschnitt 360 der Führungskulisse 36 angeordnete Deformationselement 62 als ein elastisches Element in Form einer Druckfeder ausgebildet ist. Bei einer Stauchung der Druckfeder 62 aufgrund eines Zurückschwenkens R des Kopfstützenkörpers 10, vergleiche Figur 3b, treten dabei elastische Kräfte auf, die zu einem Zurückschlagen des Kopfstützenkörpers 10 nach vorne in Richtung auf den Kopf des Fahrzeuginsassen führen könnten. Um dies zu vermeiden, ist am abgewinkelten Abschnitt 360 der Führungskulisse 36 eine Verriegelungsverzahnung 360a ausgebildet, der eine entsprechende Verzahnung 26a an dem in der Führungskulisse 36 geführten Gleiter 26 zugeordnet ist. Hierdurch wird der Gleiter in seiner in Figur 3b dargestellten, nach dem Zurückschwenken des Kopfstützenkörpers 10 in einer Richtung H nach hinten eingenommenen Position verriegelt und ein Zurückschlagen des Kopfstützenkörpers nach vorne verhindert. Die entsprechenden Verzahnungen 26a, 360a sind hierzu derart als Schrägverzahnungen ausgebildet, dass sie zwar eine Bewegung des Führungszapfens 26 in einer Richtung zulassen, die zum Zurückschwenken des Kopfstützenkörpers 10 und zum Zusammendrücken der Druckfeder 62 führt, nicht jedoch eine Bewegung in entgegengesetzter Richtung.

Bei den in den Figuren 2a und 2b sowie in den Figuren 3a und 3b dargestellten Ausführungsbeispielen sind die elastischen Mittel (Energiespeicher) jeweils nicht mit dargestellt, die überhaupt erst die Schwenkbewegung der Kopfstütze nach vorne in einem Crash-Fall auslösen. Hierzu wird auf die entsprechenden Ausführungen in den Figuren 5a bis 8 verwiesen.

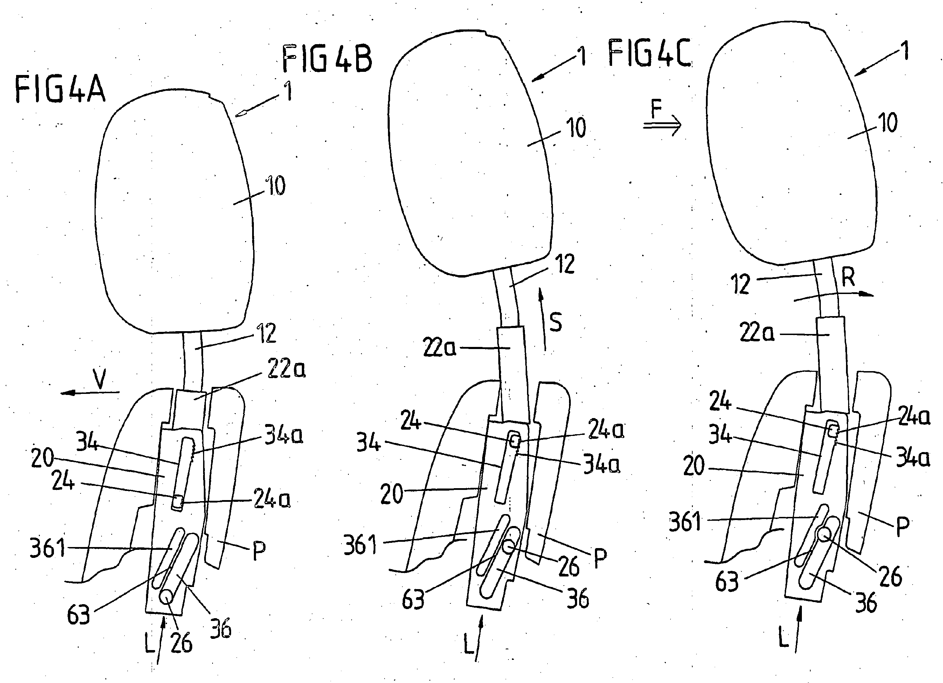

In einem weiteren in den Figuren 4a bis 4c dargestellten Ausführungsbeispiel einer Kopfstützenanordnung weist die untere Führungskulisse 36 keinen abgewinkelten Abschnitt auf. Stattdessen ist neben der unteren Führungskulisse 36 (und in gleicher Weise neben der nicht erkennbaren, weiteren unteren Führungskulisse 35) ein Freischnitt 361 ausgebildet, so dass die Führungskulisse 36 einseitig durch eine dünne, deformierbare Begrenzungswand 63 begrenzt ist.

Diese Begrenzungswand 63 ist so gestaltet, dass sie bei dem in einem Crash-Fall ausgelösten Verschwenken des Kopfstützenkörpers 10 in Richtung auf den Kopf eines Fahrzeuginsassen, entsprechend den Figuren 4a und 4b, die erforderliche Führung des Führungszapfens 26 in der unteren Führungskulisse 36 gewährleistet. Bei einem anschließenden Aufprall des Kopfes eines Fahrzeuginsassen gegen den Kopfstützenkörper 10 mit einer Kraftrichtung F nach hinten, gestattet diese plastisch deformierbare Begrenzungswand 63 demgegenüber eine begrenzte, gedämpfte Schwenkbewegung R des Kopfstützenkörpers 10 in einer Richtung H nach hinten, indem der Führungszapfen 36 sich (entgegengesetzt zu der Hauptbewegungsrichtung des Kopfstützenkörpers 10) nach vorne bewegt und hierbei die durch den Freischnitt 361 gebildete, dünnwandige Begrenzungswand 63 verformt.

## Patentansprüche

1. Kopfstützenanordnung für einen Kraftfahrzeugsitz mit
- einem Lehnengestell (5) für eine Rückenlehne, das sich entlang einer Lehnenlängsrichtung (L) erstreckt,
- einer Oberkante (O) des Lehnengestells (5), die das Lehnengestell (5) in einer aufrechten Funktionsposition in Lehnenlängsrichtung (L) nach oben begrenzt,
- einer am Lehnengestell (5) oberhalb der Oberkante (O) angeordneten Kopfstütze (1), deren Kopfstützenkörper eine zum Abstützen des Kopfes eines Fahrzeuginsassen vorgesehene Vorderseite aufweist, und
- einer Einrichtung zur Verlagerung der Kopfstütze (1) in einem Crash-Fall, um den Kopfstützenkörper nach oben und/oder vorne zu bewegen,
wobei der Kopfstütze (1) eine Dämpfungseinrichtung zugeordnet ist, die beim Aufprall eines Kopfes auf die Vorderseite des Kopfstützenkörpers (10) eine begrenzte Rückstellbewegung der Kopfstütze (1) aus ihrer verlagerten Position heraus in Aufprallrichtung (F) zulässt und die diese Bewegung (R) dämpft,
**dadurch gekennzeichnet,**
**dass** die Dämpfungseinrichtung derart ausgebildet ist, dass die Kopfstütze (1) bei der Rückstellbewegung entlang einer anderen Bahn (R) bewegt wird als bei der vorhergehenden Crash-bedingten Verlagerung (S) der Kopfstütze (1).

2. Kopfstützenanordnung nach Anspruch 1, **dadurch gekennzeichnet, dass** die Kopfstütze (1) bei der Crash-bedingten Verlagerung einerseits in Lehnenlängsrichtung (L) nach oben und andererseits senkrecht zur Lehnenlängsrichtung (L) nach vorne bewegt wird, so dass der Kopfstützenkörper (10) in Richtung auf den Kopf eines Fahrzeuginsassen verlagert, insbesondere verschwenkt, wird.

3. Kopfstützenanordnung nach Anspruch 1 oder 2, **dadurch gekennzeichnet, dass** die Einrichtung zur Verlagerung der Kopfstütze (1) mindestens eine Führungseinrichtung (33, 34, 35, 36, 37, 38), insbesondere in Form einer Führungskulisse (33, 34; 35, 36) mit einem zugeordneten Führungskörper (23, 24; 25, 26) oder in Form eines Führungshebels (37, 38) aufweist, die ein zur Verlagerung der Kopfstütze (1) bewegbares Führungselement (23, 24; 25, 26; 37,38) umfasst.

4. Kopfstützenanordnung nach Anspruch 3, **dadurch gekennzeichnet, dass** die Einrichtung zur Verlagerung der Kopfstütze (1) zwei in Lehnenlängsrichtung (L) hintereinander angeordnete Führungseinrichtungen (33, 34; 35, 36; 37,38) aufweist.

5. Kopfstützenanordnung nach Anspruch 4, **dadurch gekennzeichnet, dass** sich die obere Führungseinrichtung (33, 344), insbesondere in Form einer Führungsbahn, im Wesentlichen in Lehnenlängsrichtung (L) erstreckt und dass die in Lehnenlängsrichtung (L) untere Führungseinrichtung (35, 36), insbesondere in Form einer Führungsbahn, stärker gegenüber der Lehnenlängsrichtung (L) geneigt ist als die in Lehnenlängsrichtung (L) obere Führungsbahn (33, 34).

6. Kopfstützenanordnung nach einem der vorhergehenden Ansprüche, **dadurch gekennzeichnet, dass** die Einrichtung zur Verlagerung der Kopfstütze (1) einen Energiespeicher (31, 32) aufweist, der insbesondere durch elastische Mittel (30, 31, 32) gebildet wird, welche derart vorgespannt sind, dass sie die Tendenz haben, eine Verlagerung der Kopfstütze (1) auszulösen.

7. Kopfstützenanordnung nach einem der vorhergehenden Ansprüche, **gekennzeichnet durch** eine Verriegelungseinrichtung (4), die einer Verlagerung der Kopfstütze (1) entgegen wirkt und die in einem Crash-Fall entriegelbar ist.

8. Kopfstützenanordnung nach einem der vorhergehenden Anspruch, **dadurch gekennzeichnet, dass** die Dämpfungseinrichtung mindestens ein bei der Rückstellbewegung der Kopfstütze (1) elastisch und/oder plastisch verformbares Deformationselement (30, 61, 62, 63) aufweist.

9. Kopfstützenanordnung nach Anspruch 3 und 8, **dadurch gekennzeichnet, dass** das Deformationselement (30, 61, 62, 63) bei der Rückstellbewegung der Kopfstütze (1) aufgrund der Bewegung des Führungselementes (26) deformiert wird.

10. Kopfstützenanordnung nach Anspruch 9, **dadurch gekennzeichnet, dass** das Führungselement (26) auf das Deformationselement (61, 62, 63) einwirkt.

11. Kopfstützenanordnung nach Anspruch 9, **dadurch gekennzeichnet, dass** das Führungselement (26) mit dem Deformationselement (30) in Wirkverbindung steht und dieses bei der Rückstellbewegung der Kopfstütze (1) derart bewegt, dass es mit einem Anschlag (340) der Kopfstütze (1) in Eingriff tritt.

12. Kopfstützenanordnung nach Anspruch 1 und 3, **dadurch gekennzeichnet, dass** ein separater Bereich (360) der Führungseinrichtung (36) für die Führung der Kopfstütze (1) bei der Rückstellbewegung ausgebildet ist.

13. Kopfstützenanordnung nach Anspruch 12, **dadurch gekennzeichnet, dass** ein abgewinkelter Abschnitt (360) einer Führungskulisse (36) zur Führung der Kopfstütze (1) bei der Rückstellbewegung dient.

14. Kopfstützenanordnung nach Anspruch 8 und 13, **dadurch gekennzeichnet, dass** das Deformationselement (61, 62) in dem abgewinkelten Abschnitt (360) der Führungskulisse (36) angeordnet ist.

15. Kopfstützenanordnung nach Anspruch 3 und 10, **dadurch gekennzeichnet, dass** das Deformationselement (63) durch eine deformierbare Begrenzungswand der Führungskulisse (36) gebildet wird.

16. Kopfstützenanordnung nach Anspruch 6 oder einem der Ansprüche 7 bis 13, soweit er auf Anspruch 6 rückbezogen ist, **dadurch gekennzeichnet, dass** das Deformationselement (30) durch die als Energiespeicher dienenden elastischen Mittel gebildet ist.

17. Kopfstützenanordnung nach einem der vorhergehenden Ansprüche, **dadurch gekennzeichnet, dass** die Kopfstütze (1) bei der Rückstellbewegung eine Schwenkbewegung um eine Schwenkachse ausführt.

18. Kopfstützenanordnung nach Anspruch 17, **dadurch gekennzeichnet, dass** die Schwenkachse durch ein bewegliches Element (24) der Einrichtung zum Verschwenken der Kopfstütze (1) definiert wird, das nach der Crash-bedingten Verlagerung der Kopfstütze (1) räumlich fixiert ist.

19. Kopfstützenanordnung nach Anspruch 4 und 18, **dadurch gekennzeichnet, dass** das bewegliche Element (24) durch einen der oberen Führungseinrichtung (34) zugeordneten Gleiter gebildet wird, der mittels Verzahnungselementen räumlich fixierbar ist.

20. Kopfstützenanordnung nach einem der vorhergehenden Ansprüche, **dadurch gekennzeichnet, dass** Mittel zur Verriegelung der Kopfstütze (1) nach der Rückstellbewegung vorgesehen sind.

21. Kopfstützenanordnung nach Anspruch 12 und 20, **dadurch gekennzeichnet, dass** die Mittel zur Verriegelung der Kopfstütze (1) in dem Bereich (360) der Führungseinrichtung (36) vorgesehen sind, der zur Führung der Kopfstütze bei der Rückstellbewegung dient.

22. Kopfstützenanordnung nach Anspruch 21, **dadurch gekennzeichnet, dass** die Mittel zur Verriegelung der Kopfstütze (1) nach dem Zurückschwenken einander zugeordnete Formschlussbereiche, insbesondere in Form von Verzahnungsbereichen (26a, 360a), umfassen.

## Claims

1. Headrest arrangement for a motor vehicle seat, comprising
- a backrest frame (5) for a backrest, which backrest frame (5) extends along a longitudinal direction (L) of the backrest,
- an upper edge (O) of the backrest frame (5) that limits the backrest frame (5) upwards in the longitudinal direction (L) of the backrest in an upstanding functioning position,
- a headrest (1) arranged at the backrest frame (5) above the upper edge (O) whose head rest body comprises a front side provided for supporting the head of an occupant, and
- a device for displacing the headrest (1) in case of a crash in order to move the headrest body upwards and/or forwards,
wherein a damping device is associated to the headrest (1) that upon impact of a head onto the front side of the head rest body (10) allows for a limited return movement of the headrest (1) out of its displaced position in the impact direction (F) and which damps this movement (R),
**characterized in that**,
the damping device is designed such that upon the return movement the headrest (1) is moved along a different track (R) than in the preceding crash-caused displacement (S) of the headrest.

2. Headrest arrangement according to claim 1, **characterized in that** upon the crash-caused displacement the headrest (1) is on one hand moved upwards in the longitudinal direction (L) of the backrest and on the other hand is moved forwards perpendicular to the longitudinal direction (L) of the backrest, so that the headrest body (10) is displaced, particularly pivoted, towards the head of the occupant.

3. Headrest arrangement according to claim 1 or 2, **characterized in that** the device for displacing the headrest (1) comprises at least one guiding device (33, 34; 35, 36; 37, 38), particularly in the form of a guiding coulisse (33, 34; 35, 36) having an associated guiding body (23, 24; 25, 26), or in the form of a guiding lever (37, 38), which guiding device (33, 34; 35, 36; 37, 38) comprises a moveable guiding element (23, 24; 25, 26; 37, 38) for displacing the head rest (1).

4. Headrest arrangement according to claim 3, **characterized in that** the device for displacing the headrest (1) comprises two guiding devices (33, 34; 35, 36; 37, 38) that are arranged one after another in the longitudinal direction (L) of the backrest.

5. Headrest arrangement according to claim 4, **characterized in that** the upper guiding device (33, 34), particularly in the form of a guiding track, extends essentially in the longitudinal direction (L) of the backrest, and **in that** the with respect to the longitudinal direction (L) of the backrest lower guiding device, particularly in the form of a guiding track, has a stronger slope with respect to the longitudinal direction (L) of the backrest than the with respect to the longitudinal direction (L) of the backrest upper guiding track (33, 34).

6. Headrest arrangement according to one of the preceding claims, **characterized in that** the device for displacing the headrest (1) comprises an energy storage (31, 32) that is particularly formed by elastic means (30, 31, 32) that are pre-tensioned in such a manner that they have the tendency to activate a displacement of the headrest (1).

7. Head rest arrangement according to one of the preceding claims, **characterized by** a locking device (4) that acts against a displacement of the headrest (1) and that is unlockable in case of a crash.

8. Headrest arrangement according to one of the preceding claims, **characterized in that** the damping device comprises at least one deformation element (30, 61, 62, 63) that is elastically and/or plastically deformable upon the return movement of the headrest (1).

9. Headrest arrangement according to claims 3 and 8, **characterized in that** the deformation element (30, 61, 62, 63) is deformed upon the return movement of the headrest (1) due to the movement of the guiding element (26).

10. Headrest arrangement according to claim 9, **characterized in that** the guiding element (26) acts on the deformation element (61, 62, 63).

11. Headrest arrangement according to claim 9, **characterized in that** the guiding element (26) is in operational connection with the deformation element (30) and moves the latter upon the return movement of the headrest (1) in such a manner, that it engages a stop (340) of the headrest (1).

12. Headrest arrangement according to claim 1 und 3, **characterized in that** a separate area (360) of the guiding device (36) is designed for guiding the headrest (1) upon the return movement.

13. Headrest arrangement according to claim 12, **characterized in that** an angled section (360) of a guiding coulisse (36) serves for guiding the headrest (1) upon the return movement.

14. Headrest arrangement according to claim 8 and 13, **characterized in that** the deformation element (61, 62) is arranged in the angled section (360) of the guiding coulisse (36).

15. Headrest arrangement according to claim 3 and 10, **characterized in that** the deformation element (63) is formed by a deformable limiting wall of the guiding coulisse (36).

16. Headrest arrangement according to claim 6 or one of the claims 7 to 13 as far as referred back to claim 6, **characterized in that** the deformation element (30) is formed by the elastic means serving as an energy storage.

17. Headrest arrangement according to one of the preceding claims, **characterized in that** the headrest (1) upon the return movement makes a pivoting movement about a pivoting axis.

18. Headrest arrangement according to claim 17, **characterized in that** the pivoting axis is defined by a movable element (24) of the device for pivoting the headrest (1), which element (4) is spatially fixed after the crash-caused displacement of the headrest (1).

19. Headrest arrangement according to claim 4 and 18, **characterized in that** the movable element (24) is formed by a slider associated to the upper guiding device (34), which slider is spatially fixable by means of toothed elements.

20. Headrest arrangement according to one of the preceding claims, **characterized in that** means are provided for locking the headrest (1) after the return movement.

21. Headrest arrangement according to claim 12 and 20, **characterized in that** means for locking the headrest (1) are provided in the area (360) of the guiding device (36), which area (360) serves for guiding the headrest upon the return movement.

22. Headrest arrangement according to claim 21, **characterized in that** the means for locking the headrest (1) involve after the pivoting back form-fit areas associated to each other, particularly in the form of toothed areas (26a, 360a).

## Revendications

1. Ensemble appui-tête pour un siège de véhicule automobile, comprenant
- une ossature de dossier (5) pour un dossier, qui s'étend le long d'une direction longitudinale (L) de dossier,
- une arête supérieure (O) de l'ossature de dossier (5), qui délimite vers le haut l'ossature de dossier (5) en direction longitudinale (L) dans une position fonctionnelle redressée,
- un appui-tête (1) agencé sur l'ossature de dossier (5) au-dessus de l'arête supérieure (O), dont le corps d'appui-tête comporte une face avant prévue pour soutenir la tête d'un occupant du véhicule, et
- un système pour déplacer l'appui-tête (1) dans le cas d'une collision, afin de déplacer le corps d'appui-tête vers le haut et/ou vers l'avant, dans lequel un dispositif d'amortissement est associé à l'appui-tête (1), qui autorise en cas d'impact d'une tête sur la face antérieure du corps d'appui-tête (10) un mouvement de recul limité de l'appui-tête (1) hors de sa position déplacée jusque dans la direction d'impact (F) et qui amortit ce mouvement (R),
**caractérisé en ce que**
le dispositif d'amortissement est réalisé de telle façon que l'appui-tête (1) est déplacé, lors du mouvement de recul, le long d'une autre trajectoire (R) que celle du déplacement (S) précédent de l'appui-tête (1) sous l'effet de la collision.

2. Ensemble appui-tête selon la revendication 1, **caractérisé en ce que** l'appui-tête (1) est déplacé, lors du déplacement sous l'effet de la collision, d'une part dans la direction longitudinale (L) du dossier vers le haut et d'autre part perpendiculairement à la direction longitudinale du dossier (L) vers l'avant, de sorte que le corps d'appui-tête (10) est déplacé en direction de la tête d'un occupant du véhicule, en particulier par pivotement.

3. Ensemble appui-tête selon la revendication 1 ou 2, **caractérisé en ce que** le système pour déplacer l'appui-tête (1) comprend au moins un moyen de guidage (33, 34 ; 35, 36 ; 37, 38), en particulier sous la forme d'une glissière de guidage (33, 34; 35, 36) avec un corps de guidage associé (23, 24; 25, 26) ou sous la forme d'un levier de guidage (37, 38), ledit moyen de guidage comprenant un élément de guidage (23, 24; 25, 26; 37, 38) qui peut être déplacé pour déplacer l'appui-tête (1).

4. Ensemble appui-tête selon revendication 3, **caractérisé en ce que** le système pour déplacer l'appui-tête (1) comprend deux dispositifs de guidage (33, 34 ; 35, 36 ; 37, 38) agencés l'un derrière l'autre en direction longitudinale (L) du dossier.

5. Ensemble appui-tête selon la revendication 4, **caractérisé en ce que** le dispositif de guidage supérieur (33, 34), en particulier sous la forme d'une voie de guidage, s'étend essentiellement en direction longitudinale (L) du dossier, et **en ce que** le dispositif de guidage inférieur (35, 36) en direction longitudinale (L) du dossier, en particulier sous la forme d'une voie de guidage, est plus fortement inclinée par rapport à la direction longitudinale (L) du dossier que la voie de guidage supérieure (33, 34) en direction longitudinale (L) du dossier.

6. Ensemble appui-tête selon l'une des revendications précédentes, **caractérisé en ce que** le système pour déplacer l'appui-tête (1) comprend un accumulateur d'énergie (31, 32), qui est formé en particulier par des moyens élastiques (30, 31, 32), lesquels sont précontraints de manière à présenter la tendance à déclencher un déplacement de l'appui-tête (1).

7. Ensemble appui-tête selon l'une des revendications précédentes, **caractérisé par** un dispositif de verrouillage (4), qui s'oppose à un déplacement de l'appui-tête (1) et qui peut être déverrouillé dans un cas de collision.

8. Ensemble appui-tête selon l'une des revendications précédentes, **caractérisé en ce que** le dispositif d'amortissement comprend au moins un élément de déformation (30, 61, 62, 63) déformable élastiquement et/ou plastiquement lors du mouvement de recul de l'appui-tête (1).

9. Ensemble appui-tête selon la revendication 3 et 8, **caractérisé en ce que** l'élément de déformation (30, 61, 62, 63) est déformé lors du mouvement de recul de l'appui-tête (1) en raison du déplacement de l'élément de guidage (26).

10. Ensemble appui-tête selon la revendication 9, **caractérisé en ce que** l'élément de guidage (26) agit sur l'élément de déformation (61, 62, 63).

11. Ensemble appui-tête selon la revendication 9, **caractérisé en ce que** l'élément de guidage (26) est en liaison d'action avec l'élément de déformation (30) et déplace celui-ci lors du mouvement de recul de l'appui-tête (1) de telle manière qu'il vient en engagement avec une butée (340) de l'appui-tête (1).

12. Ensemble appui-tête selon la revendication 1 et 3, **caractérisé en ce qu'**une région séparée (360) du système de guidage (36) est réalisé pour le guidage de l'appui-tête (1) lors du mouvement de recul.

13. Ensemble appui-tête selon la revendication 12, **caractérisé en ce qu'**un tronçon coudé (360) d'une glissière de guidage (36) sert au guidage de l'appui-tête (1) lors du mouvement de recul.

14. Ensemble appui-tête selon la revendication 8 et 13, **caractérisé en ce que** l'élément de déformation (61, 62) est agencé dans le tronçon coudé (360) de la glissière de guidage (36).

15. Ensemble appui-tête selon la revendication 3 et 10, **caractérisé en ce que** l'élément de déformation (63) est formé par une paroi de délimitation déformable de la glissière de guidage (36).

16. Ensemble appui-tête selon la revendication 6, ou l'une des revendications 7 à 13 combinée de la revendication 6, **caractérisé en ce que** l'élément de déformation (30) est formé par les moyens élastiques servant d'accumulateur d'énergie.

17. Ensemble appui-tête selon l'une des revendications précédentes, **caractérisé en ce que** l'appui-tête (1) exécute un mouvement de pivotement autour d'un axe de pivotement lors du mouvement de recul.

18. Ensemble appui-tête selon la revendication 17, **caractérisé en ce que** l'axe de pivotement est défini par un élément mobile (24) du système pour faire pivoter l'appui-tête (1), lequel est fixé dans l'espace après déplacement de l'appui-tête (1) sous l'effet de la collision.

19. Ensemble appui-tête selon la revendication 4 et 18, **caractérisé en ce que** l'élément mobile (24) est formé par un coulisseau associé au dispositif de guidage supérieur (34), ledit coulisseau pouvant être fixé dans l'espace au moyen d'éléments à denture.

20. Ensemble appui-tête selon l'une des revendications précédentes, **caractérisé en ce qu'**il est prévu des moyens pour verrouiller l'appui-tête (1) après le mouvement de recul.

21. Ensemble appui-tête selon la revendication 12 et 20, **caractérisé en ce que** les moyens pour verrouiller l'appui-tête (1) sont prévus dans la région (360) du dispositif de guidage (36) qui sert au guidage de l'appui-tête lors du mouvement de recul.

22. Ensemble appui-tête selon la revendication 21, **caractérisé en ce que** les moyens pour verrouiller l'appui-tête (1), après le pivotement en retour, comprennent des zones mutuellement associées à coopération de formes, en particulier sous la forme de zones à dentures (26a, 360a).
